# NEUE EUROPÄISCHE PATENTSCHRIFT

(11) **EP 0 592 969 B2**
(45) Veröffentlichungstag und Bekanntmachung des Hinweises auf die Entscheidung über den Einspruch: **06.10.1999**
(45) Hinweis auf die Patenterteilung: 13.03.1996
(21) Anmeldenummer: 93116383.6
(22) Anmeldetag: 09.10.1993
(51) Int. Cl.: C01B 15/10

(54) **Durch Beschichtung stabilisierte Natriumpercarbonate**
Percarbonate stabilized with coating
Percarbonate de sodium stabilisé par revêtement

(30) Priorität: 16.10.1992 DE 4234966; 10.08.1993 DE 4326804
(43) Veröffentlichungstag der Anmeldung: 20.04.1994
(73) Patentinhaber: Solvay Interox GmbH, D-30625 Hannover (DE)
(72) Erfinder: Rösler, Richard, B-1950 Kraainen (BE); Söntgerath, Alfred, D-53547 Hausen (DE); Dötsch, Werner, D-53557 Bad Hönningen (DE); Hecken, Gerd, D-53506 Vettelschoss (DE)
(74) Vertreter: Lauer, Dieter, Dr.

(56) Entgegenhaltungen:
- DE-A- 2 328 803
- DE-A- 2 652 776
- DE-A- 2 915 980
- DE-A- 3 321 082
- DE-C- 2 800 760
- DE-C- 3 720 277
- SU-A- 176 684
- PATENT ABSTRACTS OF JAPAN vol. 10, no. 245 (C-368) (2301) 22. August 1986 & JP-A-61 077 607 (NIPPON GOSEI SENZAI K.K.) 21. April 1986

## Beschreibung

Die Erfindung betrifft die Stabilisierung von Natriumpercarbonaten durch Umhüllung mit einem anorganischen Beschichtungsmaterial.

Natriumpercarbonat wird als bleichender Bestandteil in pulverförmigen Wasch-, Bleich- und Reinigungsmitteln verwendet. Es zeichnet sich durch eine gute Wasserlöslichkeit sowie eine rasche Freisetzung des Wasserstoffperoxides aus und ist umweltfreundlich, da seine Zerfallsprodukte die Umwelt nicht belasten.

Ein Nachteil des Natriumpercarbonates ist seine relativ geringe Lagerstabilität in Gegenwart von üblichen Waschmittelbestandteilen. Deshalb sind auch eine Vielzahl von Maßnahmen vorgeschlagen worden, um die Stabilität von Natriumpercarbonat durch stabilisierende Zusätze und/oder Umhüllen der Natriumpercarbonatpartikel mit stabilisierenden Schichten zu verbessern. In der DE 26 22 610 wird z.B. eine Beschichtung mit einem anorganischen Beschichtungsmaterial aus Natriumsulfat, Natriumcarbonat und Natriumsilikat vorgeschlagen. In DE 28 00 916 und DE 33 21 082 werden Beschichtungen mit Borverbindungen enthaltenden Materialien vorgeschlagen.

Aufgabe der vorliegenden Erfindung ist es, ein Beschichtungsmaterial für Natriumpercarbonat bereitzustellen, welches dessen Lagerstabilität in Waschpulvern erhöht, und ein umweltfreundliches Verfahren zur stabilisierenden Beschichtung von Natriumpercarbonatpartikeln zu entwickeln.

Es wurde nun gefunden, daß eine Stabilisierung von Natriumpercarbonat besonders vorteilhaft mit Hilfe eines Natriumchlorid und Natriumcarbonat enthaltenden Beschichtungsmaterials erreicht werden kann.

Gegenstand der Erfindung sind deshalb mit einem festen anorganischen Beschichtungsmaterial umhüllte Natriumpercarbonatpartikel, welche dadurch gekennzeichnet sind, daß das Beschichtungsmaterial aus einem Gemisch aus Natriumcarbonat und Natriumchlorid und gegebenenfalls auch bei der Natriumpercarbonat-Herstellung üblichen Hilfsstoffen wie Kristallisationshilfsmittel und/oder Stabilisatoren besteht.

Ferner ist Gegenstand der vorliegenden Erfindung ein Verfahren zur Herstellung derartiger umhüllter Natriumpercarbonatpartikel, welches dadurch gekennzeichnet ist, daß man die Natriumpercarbonatpartikel mit dem Beschichtungsmaterial umhüllt, in dem man die Natriumpercarbonatpartikel mit einem wäßrigen Beschichtungsmittel, welches eine wäßrige Lösung oder Suspension der Bestandteile des Beschichtungsmaterials darstellt, behandelt, und die mit dem wäßrigen Beschichtungsmittel behandelten Partikel trocknet.

Als Natriumpercarbonat kann ein Natriumpercarbonat eingesetzt werden, das nach an sich bekannten Verfahren durch Umsetzung von Natriumcarbonat mit Wasserstoffperoxid hergestellt wurde. So kann die Herstellung von erfindungsgemäß zu behandelndem Natriumpercarbonat nach den im Stand der Technik an sich bekannten Verfahren durch Umsetzung von Soda (Na₂CO₃) mit wäßriger Wasserstoffperoxid-Lösung erfolgen. Beispielsweise besteht ein übliches Verfahren zur Herstellung von Natriumpercarbonat darin, eine Wasserstoffperoxidlösung mit einer Natriumcarbonatlösung oder -suspension gegebenenfalls unter Zusatz einer zum Aussalzen des gebildeten Natriumpercarbonates ausreichenden Menge Kochsalz umzusetzen und das auskristallisierte Natriumpercarbonat von der Mutterlauge abzutrennen und zu trocknen. Zur Herstellung von Natriumpercarbonat eignen sich im allgemeinen konzentrierte Wasserstoffperoxidlösungen und eine konzentrierte wäßrige Sodalösung bzw. -suspension, welche Soda in über die Sättigungskonzentration hinausgehenden Mengen enthält. Insbesondere eignen sich Soda-Konzentrationen im Bereich von etwa 200 - 250 g/l. Dem Reaktionsgemisch aus Soda und H₂O₂ können auch an sich bei der Herstellung von Natriumpercarbonaten übliche Hilfsstoffe wie beispielsweise Kristallisationshilfsmittel und/oder Stabilisatoren zugesetzt werden. Beispiele für übliche Additive bei der Natriumpercarbonat-Herstellung sind Natriumpolyphosphate wie z.B. Natriumhexamethaphosphat, Natriumsilikate wie z.B. Wasserglas, Natriumpolycarboxylate, Phosphonsäuren wie z.B. 1-Hydroxyethan-1,1-diphosphonsäure und deren Salze, und Magnesiumsulfat. Verfahren zur Herstellung von Natriumpercarbonat durch Umsetzen von geeignete Additive enthaltenden wäßrigen Sodalösungen bzw. -suspensionen mit Wasserstoffperoxidlösungen, Kristallisation des gebildeten Natriumpercarbonates, Abtrennung des Kristallisates von der Mutterlauge und anschließendes Trocknen des Kristallisates werden beispielsweise in DE 23 28 803 und DE 26 22 458 beschrieben. Granulierte Natriumpercarbonat-Partikel können auch nach konventionellen Sprühtrocknungsverfahren hergestellt werden. Hierbei wird im allgemeinen zunächst die Soda enthaltende Lösung mit der Wasserstoffperoxid-Lösung und gegebenenfalls weiteren Additiven zu einem Reaktionsgemisch vereint und dieses dann dem Sprühtrockner zugeführt. Ein weiteres ebenfalls bekanntes Verfahren ist die sogenannte Sprühgranulierung (Fließbettsprühtrocknung), bei der ein Gemisch einer sodahaltigen Lösung mit der Wasserstoffperoxid-Lösung in einem Wirbelschichttrockner auf vorgelegte Natriumpercarbonatkeime aufgesprüht wird. Auch durch Umsetzung von festem Natriumcarbonat mit konzentrierter wäßriger Wasserstoffperoxidlösung in einer Intensivmischungsvorrichtung, wie z.B. in der DD 282 813 beschrieben, kann Natriumpercarbonat auf an sich bekannte Weise erhalten werden.

Die erfindungsgemäß beschichteten Natriumpercarbonatpartikel enthalten im allgemeinen mindestens 1 Gew.-%, vorzugsweise 2-12 Gew.-% Beschichtungsmaterial bezogen auf das Gesamtgewicht der beschichteten Partikel. Als besonders zweckmäßig erweisen sich Beschichtungen mit 3-7 Gew.-% Beschichtungsmaterial bezogen auf das Gesamtgewicht der beschichteten Partikel.

Hauptbestandteil des erfindungsgemäßen Beschichtungsmaterials ist ein Gemisch aus Natriumcarbonat und Natriumchlorid. Zweckmäßig macht dieses Gemisch mindestens 80 Gew.-% des Beschichtungsmaterials aus. Das Natriumchlorid ist ein für die Verarbeitungseigenschaften des Beschichtungsmaterials wesentlicher Bestandteil. Zweckmäßig liegt in dem Gemisch Natriumcarbonat/Natriumchlorid ein Gewichtsverhältnis von Natriumcarbonat zu Natriumchlorid von 1:5 bis 3:1, vorzugsweise von 1:4 bis 2:1 vor; Gewichtsverhältnisse von 1:2 bis 2:1 im Gemisch Natriumcarbonat/Natriumchlorid sind besonders bevorzugt.

Gegebenenfalls kann das Beschichtungsmaterial neben dem Gemisch aus Natriumcarbonat und Natriumchlorid noch weitere bei der Natriumpercarbonat-Herstellung übliche Hilfsstoffe enthalten. Der Anteil an derartigen Hilfsstoffen sollte höchstens bis zu 20 Gew.-% bezogen auf Gesamtbeschichtungsmaterial betragen. Das heißt, er kann zwischen 0 und 20 Gew.-% des Beschichtungsmaterials liegen. Zu den bei der Natriumpercarbonat-Herstellung üblichen Hilfsstoffen, welche in dem erfindungsgemäßen Beschichtungsmaterial vorliegen können, zählen beispielsweise Natriumpolyphosphate, insbesondere Natriumhexamethaphosphat, welche beispielsweise in Mengen von 0 bis 10 Gew.-% bezogen auf Beschichtungsmaterial vorliegen können; Natriumpolycarboxylate, insbesondere Natriumsalze von Acrylsäurepolymerisaten wie Acrylsäurehomopolymerisaten oder Acrylsäure/Maleinsäurecopolymerisaten mit molaren Massen im Bereich von 2.500 bis 100.000, insbesondere Natriumpolyacrylate, welche in Mengen von 0 bis 10 Gew.-% bezogen auf Beschichtungsmaterial vorliegen können; Natriumsilikate, vorzugsweise Wasserglas mit einem Verhältnis SiO₂:Na₂O von 3,5:1 bis 2:1, welche in Mengen von 0 bis 20 Gew.-% bezogen auf Beschichtungsmaterial vorliegen können; Phosphonsäuren, insbesondere gegebenenfalls durch Hydroxy substituierte Niederalkanmono- oder -diphosphonsäuren wie z.B. 1-Hydroxyethan-1,1-diphosphonsäure, oder deren Salze, welche beispielsweise in Mengen von 0 bis 5 Gew.-% bezogen auf das Beschichtungsmaterial vorliegen können; und wasserlösliche Magnesiumsalze, insbesondere Magnesiumsulfat, welche in Mengen von 0 bis 10 Gew.-% bezogen auf das Beschichtungsmaterial vorliegen können. Außer den hier genannten Hilfsmitteln können selbstverständlich auch alle sonst für die Herstellung von Natriumpercarbonat bekannterweise einsetzbaren Hilfsstoffe in dem Beschichtungsmaterial zugegen sein.

Erfindungsgemäß werden die mit dem Beschichtungsmaterial umhüllten Natriumpercarbonatpartikel hergestellt, indem man diese mit einem wäßrigen Beschichtungsmittel, welches eine wäßrige Lösung oder Suspension der Bestandteile des Beschichtungsmaterials darstellt, auf an sich bekannte Weise behandelt und die mit dem Beschichtungsmittel behandelten Partikel trocknet. Dabei kann man auf an sich bekannte Weise entweder so vorgehen, daß das wäßrige Beschichtungsmittel zunächst auf die Partikel aufgebracht wird und die mit dem Beschichtungsmittel angefeuchteten Partikel anschließend getrocknet werden, oder man kann in ebenfalls bekannter Weise das wäßrige Beschichtungsmittel in einem mit Warmluft durchströmten Wirbelschichttrockner auf die Partikel aufsprühen, wobei gleichzeitig die Trocknung stattfindet.

Nach dem erfindungsgemäßen Verfahren wird bevorzugt zunächst das wäßrige Beschichtungsmittel in einem Mischer auf die zu beschichtenden Natriumpercarbonatpartikel aufgebracht, und diese werden anschließend getrocknet, vorzugsweise in einem Wirbelschichttrockner. Zweckmäßig erfolgt das Aufbringen des wäßrigen Beschichtungsmittels auf die Natriumpercarbonatpartikel in einem schnell rotierenden Mischer mit Wurf- oder Schleudertechnik, welcher eine gute und schnelle Verteilung des wäßrigen Beschichtungsmittels auf dem zu beschichtenden Gut gewährleistet und somit ein druckloses Aufbringen des wäßrigen Beschichtungsmittels ermöglicht. Dies ist insbesondere dann von Vorteil, wenn das wäßrige Beschichtungsmittel eine Suspension oder eine zur Kristallisation und/oder Verkrustung neigende Lösung darstellt. Die Temperatur des wäßrigen Beschichtungsmittels kann in Abhängigkeit von seinem Feststoffgehalt variieren und liegt zweckmäßig in Bereichen zwischen Raumtemperatur und 60 °C. Bei dieser bevorzugten Verfahrensvariante können von dem erfindungsgemäßen Beschichtungsmittel auf die Natriumpercarbonatpartikel relativ hohe Mengen, nämlich Mengen, welche einer Mischgutfeuchte von bis zu 12 Gew.-% (d.h., einem rechnerischen Wassergehalt des Mischgutes von bis zu 12 Gew.-%) entsprechen, aufgebracht werden, ohne daß eine Überfeuchtung des Mischgutes auftritt. Es findet trotz derartig hoher Mischgutfeuchten auch nur eine unwesentliche Agglomeratbildung statt. So wird es erfindungsgemäß möglich, in einem einzigen Beschichtungsgang ungewöhnlich hohe Mengen an Beschichtungsmaterial auf die Natriumpercarbonatpartikel aufzubringen. Beispielsweise kann der mit dem Beschichtungsmittel eingebrachte Feststoffgehalt (≙ Beschichtungsmaterial) bis zu 7 Gew.-% des Gesamtfeststoffgehaltes des feuchten Mischgutes (≙ Natriumpercarbonatpartikel + Beschichtungsmaterial) betragen. Die Trocknung der mit dem wäßrigen Beschichtungsmittel behandelten Natriumpercarbonatpartikel erfolgt zweckmäßig bis zu einem Restwassergehalt von unter 1,5 Gew.-%, vorzugsweise unter 0,8 Gew.-%. Die Trocknung kann bei Trocknungstemperaturen im Bereich von 55 bis 85 °C, vorzugsweise 65 bis 80 °C, durchgeführt werden. Gewünschtenfalls kann der Beschichtungsvorgang mehrfach wiederholt werden, um höhere Mengen an Beschichtungsmaterial auf die Natriumpercarbonatpartikel aufzubringen.

Vorteilhaft kann als wäßriges Beschichtungsmittel auch eine das Beschichtungsmaterial enthaltende Suspension eingesetzt werden, welche in ihrer Zusammensetzung einer für die Herstellung von Natriumpercarbonat einsetzbaren, Natriumchlorid und gegebenenfalls auch bei der Natriumpercarbonatherstellung übliche Hilfsstoffe enthaltenden, wäßrigen Natriumcarbonat-Suspension entspricht.

Somit werden bei der erfindungsgemäßen Stabilisierung von Natriumpercarbonat durch Beschichtung nur schon bei der Natriumpercarbonat-Herstellung eingesetzte Stoffe verwendet. Bei Verwendung eines in seiner Zusammensetzung der für die Natriumpercarbonatherstellung eingesetzten Ausgangssodasuspension entsprechenden Beschichtungsmittels ergibt sich ein weiterer Vorteil dadurch, daß kein separates Beschichtungsmittel hergestellt zu werden braucht und die gleiche Sodasuspension als Ausgangsprodukt für die Herstellung des Natriumpercarbonates und als Beschichtungsmittel für das erhaltene Natriumpercarbonat eingesetzt werden kann.

Die erfindungsgemäß beschichteten Natriumpercarbonatpartikel weisen bei der Lagerung im Gemisch mit üblichen Waschmittelbestandteilen eine gute Stabilität auf und ihre Lösegeschwindigkeit in Wasser wird durch die Beschichtung praktisch nicht behindert.

Die nachfolgenden Beispiele sollen die Erfindung näher erläutern, ohne jedoch ihren Umfang zu beschränken.

Die in den nachfolgenden Beispielen angegebenen Lösegeschwindigkeiten in Wasser wurden auf an sich bekannte Weise bestimmt in einem 2 l-Behälter, welcher mit einem Edelstahl-Rührer ausgerüstet ist, welcher einen Schaft mit 2 vertikalen Rührflügeln von 42 mm Länge und 11 mm Höhe und einen Motor mit einer Drehleistung von 350 Umdrehungen pro Minute besitzt und dessen Schaft an der Befestigung zum Motor mit Polyethylen isoliert ist. Für die Bestimmung wurden 2 g Substanz in 1 l demineralisiertes Wasser von 15 °C gegeben und gerührt. Die Menge an gelöster Substanz wurde durch Leitfähigkeitsmessung in der Lösung bestimmt.

Die in den Beispielen angegebenen Restwassergehalte wurden auf an sich bekannte Weise bestimmt, indem eine 10 g-Probe in einen 100 ml Rundkolben eingewogen und zwei Stunden bei 60 °C unter vermindertem Druck von 5 Torr (6,665 x 10² Pa) getrocknet und anschließend der Gewichtsverlust bestimmt wurde.

### Beispiel 1: Beschichtung von Natriumpercarbonat

In einem Mischgerät (Labormischer Typ M5R der Firma Lödige) wurden 2,5 kg Natriumpercarbonat vorgelegt. Bei einer Umdrehungszahl von 260 U/min wurden 460 g der folgenden auf 40 °C erwärmten Beschichtungsflüssigkeit A zugegeben.

Wäßrige Beschichtungslösung A:

| | |
|---|---|
| NaCl-Gehalt: | 230,6 g/l |
| Na₂CO₃-Gehalt: | 118,3 g/l |
| Feststoffgehalt: | 28,6 Gew.-% |
| Dichte: | 1,22 g/ml |

Die Zugabezeit betrug 100 Sek., und das Gemisch wurde noch während einer Nachmischzeit von 60 Sek. weiter vermischt. Das Mischgut wies eine Feuchte von 11,1 Gew.-% aus. Der Feststoffgehalt der in das Mischgut eingebrachten Menge an Beschichtungsmittel betrug 5 Gew.-% bezogen auf Gesamtfeststoffgehalt des Mischgutes.

Anschließend wurde das feuchte Mischgut in einem Labor-Wirbelschichttrockner bei einer Ablufttemperatur von 75-80 °C getrocknet. Die getrockneten beschichteten Natriumpercarbonatpartikel fielen als rieselfähiges Trockenprodukt mit folgenden Eigenschaften an:

| | |
|---|---|
| Aktivsauerstoffgehalt: | 13,01 Gew.-%, |
| Restwassergehalt: | 1,1 Gew.-%, |
| Agglomeratbildung: | Gehalt an Agglomeraten mit einem Durchmesser von über 1000 µ: 3,3 Gew.-%, |

Lösegeschwindigkeit in Wasser (gemessen bei einer Konzentration von 2 g/l und einer Temperatur von 15 °C): 95 Gew.-% nach 2 Minuten gelöst

### Beispiel 2: Beschichtung von Natriumpercarbonat

Wie in Beispiel 1 beschrieben, wurden 2,5 kg Natriumpercarbonatpartikel mit 270 g der Beschichtungslösung A vermischt. Das Mischgut hatte eine Feuchte von 7,0 Gew.-%. Der Feststoffgehalt der in das Mischgut eingebrachten Menge an Beschichtungsmittel betrug 3 Gew.-% bezogen auf Gesamtfeststoffgehalt des Mischgutes. Das nach dem Trocknen des Mischgutes erhaltene rieselfähige Trockenprodukt hatte die folgenden Eigenschaften:

| | |
|---|---|
| Aktivsauerstoff-Gehalt: | 13,29 Gew.-%, |
| Restwassergehalt: | 0,9 Gew.-%, |
| Agglomeratbildung: | Gehalt an Agglomeraten mit einem Durchmesser von über 1000 µ: 0,9 Gew.-%, |

Lösegeschwindigkeit in Wasser (gemessen bei einer Konzentration von 2 g/l und einer Temperatur von 15 °C): 96 Gew.-% nach 2 Minuten.

### Vergleichsbeispiel 3: Beschichtung von Natriumpercarbonat

Nach der in Beispiel 1 beschriebenen Methode wurden 2,5 kg Natriumpercarbonat mit 417 g der folgenden Beschichtungslösung B (Temperatur 20 °C) vermischt.

| Wäßrige Beschichtungslösung B: | |
|---|---|
| NaCl-Gehalt: | 236 g/l |
| Na₂CO₃-Gehalt: | 59 g/l |
| H₂O₂-Gehalt: | 11,8 g/l |
| Feststoffgehalt: | 25 Gew.-% |
| Dichte: | 1,18 g/ml |

Das Mischgut wies eine Feuchte von 10,7 Gew.-% auf. Der Feststoffgehalt der in das Mischgut eingebrachten Menge an Beschichtungsmittel betrug 4 Gew.-% bezogen auf Gesamtfeststoffgehalt des Mischgutes.

Das nach dem Trocknen des feuchten Mischgutes erhaltene rieselfähige Trockenprodukt wies folgende Eigenschaften auf:

| | |
|---|---|
| Aktivsauerstoff-Gehalt: | 13,19 Gew.-%, |
| Restwassergehalt: | 0,83 Gew.-% |
| Agglomeratbildung: | Gehalt an Agglomeraten mit einem Durchmesser von über 1000 µ: 3,1 Gew.-%. |

Lösegeschwindigkeit in Wasser (gemessen bei einer Konzentration von 2 g/l und einer Temperatur von 15 °C): 96 Gew.-% nach 2 Minuten gelöst.

### Beispiel 4: Beschichtung von Natriumpercarbonat

Nach der in Beispiel 1 beschriebenen Methode wurden 2,5 kg Natriumpercarbonat mit 436 g der folgenden Beschichtungssuspension C (Temperatur 20 °C) vermischt.

Wäßrige Beschichtungslösung C:

| | |
|---|---|
| NaCl-Gehalt: | 230 g/l |
| Na₂CO₃-Gehalt: | 250 g/l |
| Natriumhexametaphosphat-Gehalt: | 3 g/l |
| Feststoffgehalt: | 366 g/kg Suspension |
| Dichte: | 1,32 g/ml |

Das Mischgut wies eine Feuchte von 9,4 Gew.-% auf. Der Feststoffgehalt der in das Mischgut eingebrachten Menge an Beschichtungsmittel betrug 6 Gew.-% bezogen auf Gesamtfeststoffgehalt des Mischgutes.

Das nach dem Trocknen des feuchten Mischgutes erhaltene rieselfähige Trockenprodukt wies folgende Eigenschaften auf:

| | |
|---|---|
| Aktivsauerstoff-Gehalt: | 13,05 Gew.-% |
| Restwassergehalt: | 0,76 Gew.-% |
| Agglomeratbildung: | Gehalt an Agglomeraten mit einem Durchmesser von über 1000 µ: 2,3 Gew.-% |

Lösegeschwindigkeit in Wasser (gemessen bei einer Konzentration von 2 g/l und einer Temperatur von 15 °C): 96 Gew.-% nach 2 Minuten.

### Beispiel 5: Beschichtung von Natriumpercarbonat

Nach der in Beispiel 1 beschriebenen Methode wurden 2,5 kg Natriumpercarbonat mit 436 g der folgenden Beschichtungssuspension D (Temperatur 45 °C) vermischt.

Wäßrige Beschichtungslösung D:

| | |
|---|---|
| NaCl-Gehalt: | 230 g/l |
| Na₂CO₃-Gehalt: | 250 g/l |
| Natriumsalz eines Maleinsäure/Acrylsäure-Copolymerisates (mittlere Molmasse 70.000): | 3 g/l |
| Feststoffgehalt: | 366 g/kg Suspension |
| Dichte: | 1,32 g/ml |

Das Mischgut wies eine Feuchte von 9,4 Gew.-% auf. Der Feststoffgehalt der in das Mischgut eingebrachten Menge an Beschichtungsmittel betrug 6 Gew.-% bezogen auf Gesamtfeststoffgehalt des Mischgutes.

Das nach dem Trocknen des feuchten Mischgutes erhaltene rieselfähige Trockenprodukt wies folgende Eigenschaften auf:

| | |
|---|---|
| Aktivsauerstoff-Gehalt: | 13,20 Gew.-% |
| Restwassergehalt: | 0,5 Gew.-% |
| Agglomeratbildung: | Gehalt an Agglomeraten mit einem Durchmesser von über 1000 µ: 2,3 Gew.-% |

Lösegeschwindigkeit in Wasser (gemessen bei einer Konzentration von 2 g/l und einer Temperatur von 15 °C): 99 Gew.-% nach 2 Minuten gelöst.

### Stabilitätsuntersuchung (Fettdruck)

Zur Untersuchung der Stabilität der beschichteten Natriumpercarbonat-Partikel in Gegenwart von Waschmittelinhaltsstoffen wurden die in den vorstehenden Beispielen hergestellten beschichteten Natriumpercarbonat-Granulate sowie zum Vergleich auch unbeschichtete Natriumpercarbonatpartikel jeweils in ein Basispulver eines handelsüblichen zeolithhaltigen Kompaktwaschmittels in einer Menge entsprechend 2 Gew.-% Aktivsauerstoff (bezogen auf die resultierende Gesamtmischung) eingebracht. Anschließend wurde für diese Gesamtmischung bei 40 °C die mit Aktivsauerstoffverlust einhergehende Zersetzung des Percarbonates durch Messung des damit verbundenen Wärmeflusses (µW/g) in einem Mikrokalorimeter bestimmt. Ein hoher Wärmefluß entspricht hierbei einer hohen Zersetzungsrate.

Die Ergebnisse sind in der nachfolgenden Tabelle angegeben und zeigen, daß die erfindungsgemäß beschichteten Natriumpercarbonate nur eine äußerst geringe Zersetzungsrate haben und sehr gut mit Waschmittelinhaltsstoffen verträglich sind.

**Tabelle**

| Material des Beispiels Nr. | Zersetzungsrate bestimmt als Wärmefluß µW/g |
|---|---|
| 1 | 19 |
| 2 | 22 |
| 3 | 31 |
| 4 | 10 |
| 5 | 15 |
| unbeschichtetes Ausgangsmaterial | 60 |

## Patentansprüche

1. Mit einem festen anorganischen Beschichtungsmaterial umhüllte Natriumpercarbonatpartikel, dadurch gekennzeichnet, daß das Beschichtungsmaterial aus einem Gemisch aus Natriumcarbonat und Natriumchlorid und gegebenenfalls auch bei der Natriumpercarbonat-Herstellung üblichen Hilfsstoffen besteht.

2. Umhüllte Natriumpercarbonatpartikel gemäß Anspruch 1, dadurch gekennzeichnet, daß das Beschichtungsmaterial mindestens 1, vorzugsweise 2-12, insbesondere 3 bis 7 Gew.-% der umhüllten Natriumpercarbonatpartikel beträgt.

3. Umhüllte Natriumpercarbonatpartikel gemäß einem der vorstehenden Ansprüche, dadurch gekennzeichnet, daß das Gemisch aus Natriumcarbonat und Natriumchlorid mindestens 80 Gew.-% des Beschichtungsmaterials beträgt.

4. Umhüllte Natriumpercarbonatpartikel gemäß einem der vorstehenden Ansprüche, dadurch gekennzeichnet, daß in dem Gemisch aus Natriumcarbonat und Natriumchlorid ein Gewichtsverhältnis von Natriumcarbonat zu Natriumchlorid von 1:5 bis 3:1, vorzugsweise von 1:4 bis 2:1 vorliegt.

5. Umhüllte Natriumpercarbonatpartikel gemäß einem der vorstehenden Ansprüche, dadurch gekennzeichnet, daß das Beschichtungsmaterial bis zu höchstens 20 Gew.-% bezogen auf Beschichtungsmaterial an bei der Natriumpercarbonat-Herstellung üblichen Hilfsstoffen enthält.

6. Umhüllte Natriumpercarbonatpartikel gemäß Anspruch 5, dadurch gekennzeichnet, daß das Beschichtungsmaterial Hilfsstoffe aus der Gruppe Natriumpolyphosphate, Natriumpolycarboxylate, Natriumsilikate, Phosphonsäuren und deren Salze, und Magnesiumsulfat enthält.

7. Verfahren zur Herstellung von mit einem festen anorganischen Beschichtungsmaterial umhüllten Natriumpercarbonatpartikeln, dadurch gekennzeichnet, daß man die Natriumpercarbonatpartikel mit einem Beschichtungsmaterial umhüllt, welches aus einem Gemisch aus Natriumcarbonat und Natriumchlorid und gegebenenfalls auch bei der Natriumpercarbonat-Herstellung üblichen Hilfsstoffen besteht, indem man die Natriumpercarbonatpartikel mit einem wäßrigen Beschichtungsmittel, welches eine wäßrige Lösung oder Suspension der Bestandteile des Beschichtungsmaterials darstellt, behandelt, und die mit dem wäßrigen Beschichtungsmittel behandelten Partikel trocknet.

8. Verfahren nach Anspruch 7, dadurch gekennzeichnet, daß das Beschichtungsmittel einen Feststoffgehalt von mindestens 20, vorzugsweise 25-45, insbesondere 30-40, Gew.-% besitzt.

9. Verfahren nach Anspruch 7 oder 8, dadurch gekennzeichnet, daß die mit dem wäßrigen Beschichtungsmittel behandelten Partikel bis zu einem Restwassergehalt von unter 1,5, vorzugsweise unter 0,8 Gew.-%, getrocknet werden.

10. Verfahren nach Anspruch 7-9, dadurch gekennzeichnet, daß bei der Behandlung der Natriumpercarbonatpartikel mit dem wäßrigen Beschichtungsmittel eine solche Menge des wäßrigen Beschichtungsmittels auf die Natriumpercarbonatpartikel aufgebracht wird, daß eine Beschichtung der Partikel mit mindestens 1, vorzugsweise 2-12, insbesondere 3 bis 7 Gew.-% Beschichtungsmaterial bezogen auf das Gesamtgewicht der umhüllten Partikel erzielt wird.

11. Verfahren nach Anspruch 7-10, dadurch gekennzeichnet, daß das Gemisch aus Natriumcarbonat und Natriumchlorid mindestens 80 Gew.-% des Beschichtungsmaterials beträgt.

12. Verfahren nach Anspruch 7-11, dadurch gekennzeichnet, daß indem Gemisch aus Natriumcarbonat und Natriumchlorid ein Gewichtsverhältnis von Natriumcarbonat zu Natriumchlorid von 1:5 bis 3:1, vorzugsweise von 1:4 bis 2:1 vorliegt.

13. Verfahren nach Anspruch 7-12, dadurch gekennzeichnet, daß das Beschichtungsmaterial mindestens 80 Gew.-% an Gemisch aus Natriumcarbonat und Natriumchlorid und höchstens bis zu 20 Gew.-% an bei der Natriumpercarbonat-Herstellung üblichen Hilfsstoffen enthält.

14. Verfahren nach Anspruch 13, dadurch gekennzeichnet, daß das Beschichtungsmaterial Hilfsstoffe aus der Gruppe Natriumpolyphosphate, Natriumpolycarboxylate, Natriumsilikate, Phosphonsäuren und deren Salze, und Magnesiumsulfat enthält.

15. Verfahren nach Anspruch 7-14, dadurch gekennzeichnet, daß als wäßriges Beschichtungsmittel eine das Beschichtungsmaterial enthaltende Suspension eingesetzt wird, welche in ihrer Zusammensetzung einer für die Herstellung von Natriumpercarbonat einsetzbaren, Natriumchlorid und gegebenenfalls bei der Natriumpercarbonatherstellung übliche Hilfsstoffe enthaltenden wäßrigen Natriumcarbonat-Suspension entspricht.

## Claims

1. Sodium percarbonate particles coated with a solid inorganic coating material, characterized in that the coating material consists of a mixture of sodium carbonate and sodium chloride and, where appropriate, also auxiliaries customary in the preparation of sodium percarbonate.

2. Coated sodium percarbonate particles according to Claim 1, characterized in that the coating material is at least 1% by weight, preferably 2-12% by weight, in particular 3 to 7% by weight, of the coated sodium percarbonate particles.

3. Coated sodium percarbonate particles according to one of the preceding claims, characterized in that the mixture of sodium carbonate and sodium chloride is at least 80% by weight of the coating material.

4. Coated sodium percarbonate particles according to one of the preceding claims, characterized in that in the mixture of sodium carbonate and sodium chloride a weight ratio of sodium carbonate to sodium chloride of from 1:5 to 3:1, preferably from 1:4 to 2:1, is present.

5. Coated sodium percarbonate particles according to one of the preceding claims, characterized in that the coating material comprises up to at most 20% by weight, based on the coating material, of auxiliaries customary in the preparation of sodium percarbonate.

6. Coated sodium percarbonate particles according to Claim 5, characterized in that the coating material comprises auxiliaries from the group consisting of sodium polysulphates, sodium polycarboxylates, sodium silicates, phosphonic acids and salts thereof, and magnesium sulphate.

7. Process for the preparation of sodium percarbonate particles coated with a solid inorganic coating material, characterized in that the sodium percarbonate particles are covered with a coating material which consists of a mixture of sodium carbonate and sodium chloride and, where appropriate, also auxiliaries customary in the preparation of sodium percarbonate by treating the sodium percarbonate particles with an aqueous coating composition, which is an aqueous solution or suspension of the constituents of the coating material, and drying the particles treated with the aqueous coating composition.

8. Process according to Claim 7, characterized in that the coating composition has a solids content of at least 20% by weight, preferably 25-45% by weight, in particular 30-40% by weight.

9. Process according to Claim 7 or 8, characterized in that the particles treated with the aqueous coating composition are dried to a residual water content of less than 1.5% by weight, preferably less than 0.8% by weight.

10. Process according to Claims 7-9, characterized in that, during the treatment of the sodium percarbonate particles with the aqueous coating composition, an amount of the aqueous coating composition is applied to the sodium percarbonate particles such that a coating of the particles with at least 1% by weight, preferably 2-12% by weight, in particular 3 to 7% by weight, of coating material, based on the overall weight of the coated particles, is achieved.

11. Process according to Claims 7-10, characterized in that the mixture of sodium carbonate and sodium chloride is at least 80% by weight of the coating material.

12. Process according to Claims 7-11,characterized in that in the mixture of sodium carbonate and sodium chloride a weight ratio of sodium carbonate to sodium chloride of from 1:5 to 3:1, preferably from 1:4 to 2:1, is present.

13. Process according to Claims 7-12, characterized in that the coating material comprises at least 80% by weight of a mixture of sodium carbonate and sodium chloride and at most up to 20% by weight of auxiliaries customary in the preparation of sodium percarbonate.

14. Process according to Claim 13, characterized in that the coating material comprises auxiliaries from the group consisting of sodium polyphosphates, sodium polycarboxylates, sodium silicates, phosphonic acids and salts thereof, and magnesium sulphate.

15. Process according to Claims 7-14, characterized in that the aqueous coating composition used is a suspension comprising the coating material, the composition of the suspension corresponding to an aqueous sodium carbonate suspension which can be used for the preparation of sodium percarbonate and which comprises sodium chloride and, where appropriate, auxiliaries common in the preparation of sodium percarbonate.

## Revendications

1. Particules de percarbonate de sodium enrobées à l'aide d'une matière de revêtement inorganique solide, caractérisées en ce que la matière de revêtement est constituée par un mélange de carbonate de sodium et de chlorure de sodium, ainsi qu'éventuellement par des adjuvants habituels dans la préparation du percarbonate de sodium.

2. Particules de percarbonate de sodium enrobées selon la revendication 1, caractérisées en ce que la matière de revêtement représente au moins 1, de préférence 2-12, en particulier de 3 à 7 % en poids des particules de percarbonate de sodium enrobées.

3. Particules de percarbonate de sodium enrobées selon l'une quelconque des revendications précédentes, caractérisées en ce que le mélange de carbonate de sodium et de chlorure de sodium représente au moins 80% en poids de la matière de revêtement.

4. Particules de percarbonate de sodium enrobées selon l'une quelconque des revendications précédentes, caractérisées en ce que, dans le mélange de carbonate de sodium et de chlorure de sodium, est présent un rapport pondéral du carbonate de sodium au chlorure de sodium de 1:5 à 3:1, de préférence de 1:4 à 2:1.

5. Particules de percarbonate de sodium enrobées selon l'une quelconque des revendications précédentes, caractérisées en ce que la matière de revêtement contient, jusqu'à concurrence d'au maximum 20% en poids rapportés à la matière de revêtement, des adjuvants habituels dans la préparation du percarbonate de sodium.

6. Particules de percarbonate de sodium enrobées selon la revendication 5, caractérisées en ce que la matière de revêtement contient des adjuvants choisis parmi le groupe comprenant des polyphosphates de sodium, des polycarboxylates de sodium, des silicates de sodium, des acides phosphoniques et leurs sels, ainsi que le sulfate de magnésium.

7. Procédé pour la préparation de particules de percarbonate de sodium enrobées à l'aide d'une matière de revêtement inorganique solide, caractérisé en ce qu'on enrobe les particules de percarbonate de sodium à l'aide d'une matière de revêtement qui est constituée par un mélange de carbonate de sodium et de chlorure de sodium, ainsi qu'éventuellement par des adjuvants habituels dans la préparation du percarbonate de sodium, en traitant les particules de percarbonate de sodium avec un agent de revêtement aqueux qui représente une suspension ou une solution aqueuse des constituants de la matière de revêtement et en séchant les particules traitées avec l'agent de revêtement aqueux.

8. Procédé selon la revendication 7, caractérisé en ce que l'agent de revêtement possède une teneur en produits solides d'au moins 20, de préférence de 25-45, en particulier de 30-40% en poids.

9. Procédé selon la revendication 7 ou 8, en ce qu'on sèche les particules traitées avec l'agent de revêtement aqueux jusqu'à ce que l'on obtienne une teneur en eau résiduelle inférieure à 1,5, de préférence inférieure à 0,8% en poids.

10. Procédé selon les revendications 7 à 9, caractérisé en ce que, lors du traitement des particules de percarbonate de sodium avec l'agent de revêtement aqueux, on applique une quantité de l'agent de revêtement aqueux sur les particules de percarbonate de sodium, telle qu'on obtient une enduction des particules avec au moins 1, de préférence 2-12, en particulier de 3 à 7% en poids de la matière de revêtement, rapportés au poids total des particules enrobées.

11. Procédé selon les revendications 7 à 10, caractérisé en ce que le mélange de carbonate de sodium et de chlorure de sodium représente au moins 80% en poids de la matière de revêtement.

12. Procédé selon les revendications 7 à 11, caractérisé en ce que, dans le mélange de carbonate de sodium et de chlorure de sodium, est présent un rapport pondéral du carbonate de sodium au chlorure de sodium de 1:5 à 3:1, de préférence de 1:4 à 2:1.

13. Procédé selon les revendications 7 à 12, caractérisé en ce que la matière de revêtement contient au moins 80 % en poids d'un mélange de carbonate de sodium et de chlorure de sodium et, jusqu'à concurrence d'au maximum 20% en poids, d'adjuvants habituels dans la préparation du percarbonate de sodium.

14. Procédé selon la revendication 13, caractérisé en ce que la matière de revêtement contient des adjuvants choisis parmi le groupe comprenant des polyphosphates de sodium, des polycarboxylates de sodium, des silicates de sodium, des acides phosphoniques et leurs sels, ainsi que le sulfate de magnésium.

15. Procédé selon les revendications 7 à 14, caractérisé en ce que, comme agent de revêtement aqueux, on met en oeuvre une suspension contenant la matière de revêtement, dont la composition correspond à celle d'une suspension aqueuse de carbonate de sodium contenant du chlorure de sodium et éventuellement des adjuvants habituels dans la préparation du percarbonate de sodium, qui peut être mise en oeuvre pour la préparation du percarbonate de sodium.
